# EUROPEAN PATENT APPLICATION

(11) **EP 4 840 518 A1**
(43) Date of publication of application: **18.11.2026**
(21) Application number: 26165483.4
(22) Date of filing: 17.03.2026
(51) Int. Cl.: A62C 3/16, A62C 35/10, A62C 37/16, H01M 50/383

(54) **BATTERY MODULE**

(30) Priority: 16.05.2025 KR 20250063963
(71) Applicant: SAMSUNG SDI CO., LTD., Yongin-si, Gyeonggi-do 17084 (KR)
(72) Inventor: Yoon, Jongwook, 17084 Yongin-si, Gyeonggi-do (KR)
(74) Representative: Meissner Bolte Partnerschaft mbB

(57) **Abstract**

A battery module (100), including a plurality of battery cells (10), a housing (61, 62, 63, 64) accommodating the plurality of battery cells (10), and a fire extinguishing portion (130) on the plurality of battery cells (10), the fire extinguishing portion (130) having a fire extinguishing agent (115, 815, 915) stored therein, wherein the fire extinguishing portion (130) includes a lower extinguishing case (110, 710, 810, 910) and a fire extinguishing cover (120) coupled to the lower extinguishing case (110, 710, 810, 910), the lower extinguishing case (110, 710, 810, 910) includes a plurality of first regions (111, 711, 811, 911) and a second region (112, 712, 812, 912), the plurality of first regions (111, 711, 811, 911) being within the second region (112, 712, 812, 912), and a thermal shrinkage rate of each of the plurality of first regions (111, 711, 811, 911) is different from that of the second region (112, 712, 812, 912).

## Description

### BACKGROUND

### 1. Field

The present invention relates to a battery module.

### 2. Description of the Related Art

Secondary batteries are rechargeable, unlike primary batteries that are not rechargeable. Low-capacity secondary batteries are used in compact portable electronic devices such as smartphones, feature phones, laptop computers, digital cameras, and camcorders, and large-capacity secondary batteries are widely used as power sources for driving motors in hybrid cars, electric cars, and as power storage batteries. These secondary batteries include an electrode assembly including a positive electrode and a negative electrode, a case for accommodating the electrode assembly, and an electrode terminal connected to the electrode assembly.

The above-described information disclosed in the background technology of the present invention is only intended to improve understanding of the background of the present invention and therefore may include information that does not constitute prior art.

### SUMMARY

The present invention relates to a battery module, including a plurality of battery cells, a housing accommodating the plurality of battery cells, and a fire extinguishing portion on the plurality of battery cells, the fire extinguishing portion having a fire extinguishing agent stored therein, wherein the fire extinguishing portion includes a lower extinguishing case and a fire extinguishing cover coupled to the lower extinguishing case, the lower extinguishing case includes a plurality of first regions and a second region, the plurality of first regions being within the second region, and a thermal shrinkage rate of each of the plurality of first regions is different from that of the second region.

Each of the plurality of battery cells may include a vent, and the plurality of first regions may overlap the vents of the plurality of battery cells, respectively.

The thermal shrinkage rate of each of the plurality of first regions may be greater than the thermal shrinkage rate of the second region.

A difference between the thermal shrinkage rate of each of the plurality of first regions and the thermal shrinkage rate of the second region may be about 0.1 % to about 10%.

A thickness of each of the plurality of first regions may be about 0.1 mm to about 2 mm.

A thickness of each of the plurality of first regions may be smaller than a thickness of the second region.

A shape of each of the plurality of first regions may be circular.

A diameter of each of the plurality of first regions may be about 5 mm to about 50 mm.

If a temperature of the battery module increases to a predetermined temperature or higher, the plurality of first regions may detach from the fire extinguishing portion.

Each of the plurality of first regions may have a cross shape.

The present invention further relates to a battery module, including a plurality of battery cells, each of the plurality of battery cells including a vent, a fire extinguishing portion on the plurality of battery cells, the fire extinguishing portion having a fire extinguishing agent stored therein, wherein the fire extinguishing portion includes a lower extinguishing case and a fire extinguishing cover coupled to the lower extinguishing case, the lower extinguishing case includes a plurality of first regions and a second region having different thermal shrinkage rates, and each of the plurality of first regions is surrounded by the second region, each of the plurality of first regions overlapping the respective vent.

If a temperature of the battery module increases to a predetermined temperature or higher, the plurality of first regions may detach from the fire extinguishing portion.

The fire extinguishing portion releases the fire extinguishing agent when the plurality of first regions detach.

A thickness of each of the plurality of first regions may be about 0.1 mm to about 2 mm.

A thickness of each of the plurality of first regions may be smaller than a thickness of the second region.

A shape of each of the plurality of first regions may be circular.

A diameter of each of the plurality of first regions may be about 5 mm to about 50 mm.

The second region may include a support portion protruding obliquely from one side of the second region toward the first regions so as to support a lower surface of each of the plurality of first regions.

A difference between the thermal shrinkage rate of each of the plurality of first regions and the thermal shrinkage rate of the second region may be about 0.1 % to about 10 %.

The second region may include a fastening projection protruding in a direction toward the plurality of first regions, and each of the plurality of first regions may include a fastening groove recessed inwardly from the plurality of first regions and corresponding to the fastening projection.

### BRIEF DESCRIPTION OF THE DRAWINGS

Features will become apparent to those of ordinary skill in the art by describing in detail exemplary embodiments with reference to the attached drawings, in which:
FIG. 1 is an exploded perspective view schematically illustrating an example of a battery module according to an embodiment of the present invention;
FIG. 2 is a perspective view schematically illustrating an example of a battery cell of the battery module of FIG. 1;
FIG. 3 is a cross-sectional view schematically illustrating an example of a cross-section B-B' of FIG. 2;
FIG. 4 is a cross-sectional view schematically illustrating an example of a cross-section A-A' of a fire extinguishing portion of FIG. 1;
FIG. 5 is a cross-sectional view illustrating a first region detaching and a stored fire extinguishing agent being released when a temperature of a battery module increases;
FIG. 6 is a plan view schematically illustrating an example of a lower extinguishing case of the fire extinguishing portion of FIG. 4;
FIG. 7 is a plan view schematically illustrating another example of a lower extinguishing case of the fire extinguishing portion of FIG. 4;
FIG. 8 is a cross-sectional view schematically illustrating another example of the cross-section A-A' of the fire extinguishing portion of FIG. 1; and
FIG. 9 is a cross-sectional view schematically illustrating another example of the cross-section A-A' of the fire extinguishing portion of FIG. 1.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and the claims should not be interpreted as limited to ordinary or literary meaning but construed as meanings and concepts not departing from the spirit and scope of the present invention based on the principle that the inventor is capable of defining concepts of terms in order to describe his or her present invention in the most appropriate way. Accordingly, the features disclosed in the embodiments and drawings of the present specification are examples of preferred embodiments of the present invention, and thus it should be understood that there are alternative equivalents or variation examples that can replace the preferred embodiments at the point of the filing of the present application.

It will be further understood that the terms "comprises," "includes" and/or "comprising," "including," when used in this specification, specify the presence of stated features, integers, steps, operations, elements, and/or components, but do not preclude the presence or addition of one or more other features, integers, steps, operations, elements, components, and/or groups thereof.

Additionally, to aid understanding of the present invention, the attached drawings are not drawn to scale and the dimensions of some components may be exaggerated. Additionally, like reference numerals are used for like elements in different embodiments.

Although the terms "first, second," etc. are used to describe various components, these components are not limited by these terms. These terms are only used to distinguish one component from another, and unless there is a particular description contrary thereto, a first component may also be a second component.

Throughout the specification, unless otherwise specifically stated, each element may be singular or plural.

Any component being arranged "on (or below)" a component or "on (or below)" a component may indicate not only that any component is arranged in contact with the upper surface (or lower surface) of said component, but also that other components may be between said component and any component arranged on (or below) said component.

Additionally, when it is described that a component is "connected," "coupled," or "linked" to another component, it should be understood that the components may be directly connected or linked to one another, but that other components may also be "interposed" between the components, or that each component may be "connected," "coupled," or "linked" through other components. Also, when a part is described as being electrically coupled to another part, this includes not only cases where the parts are directly connected, but also cases where the parts are connected with another element in between.

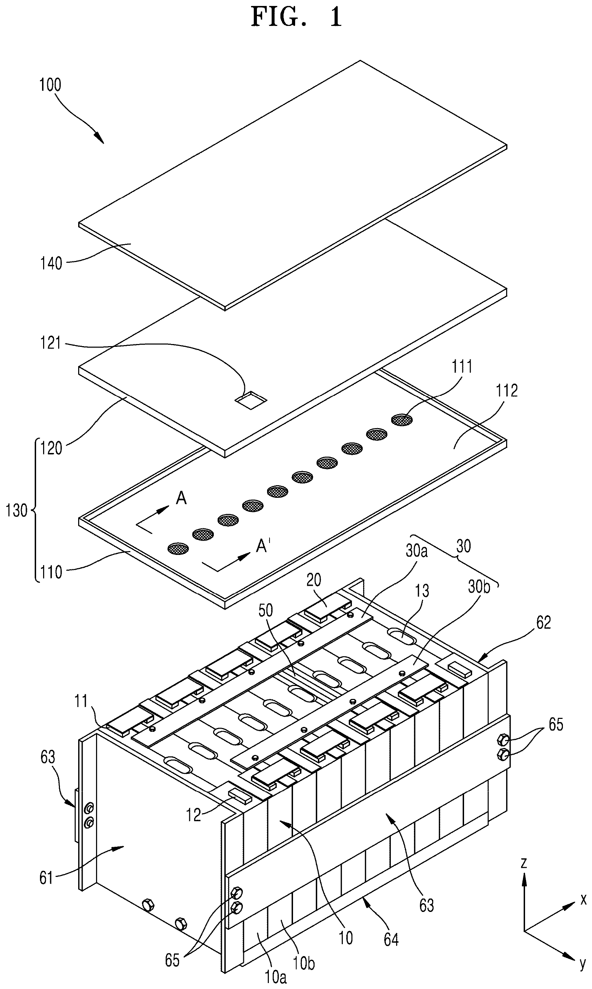

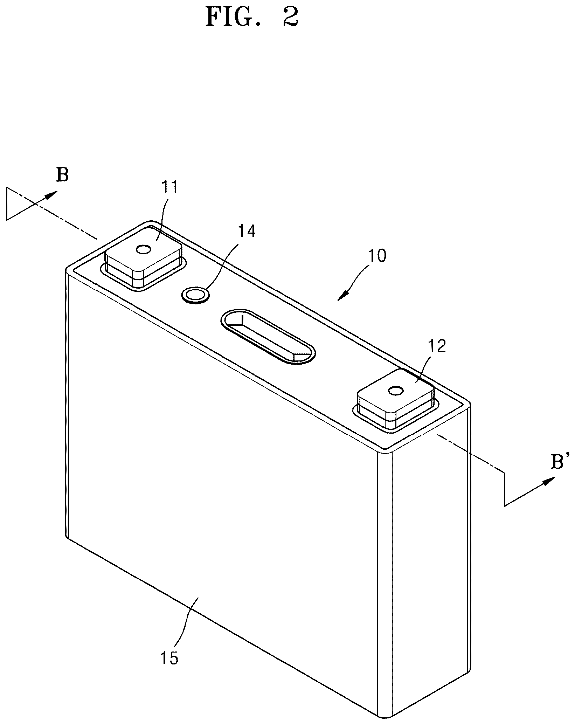

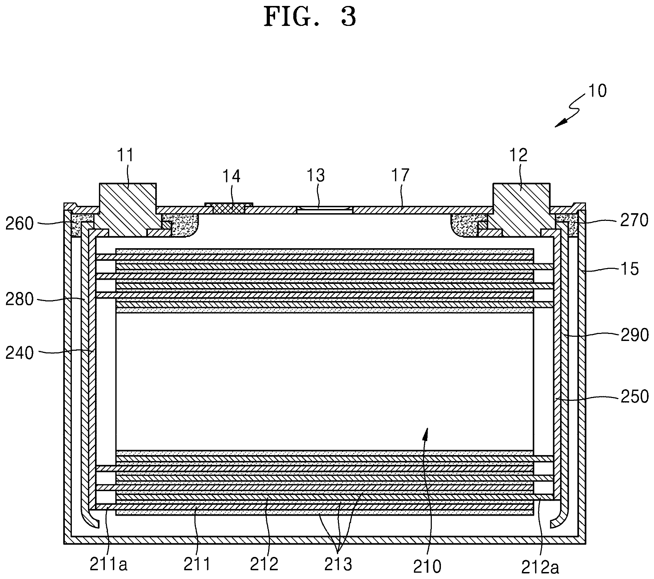

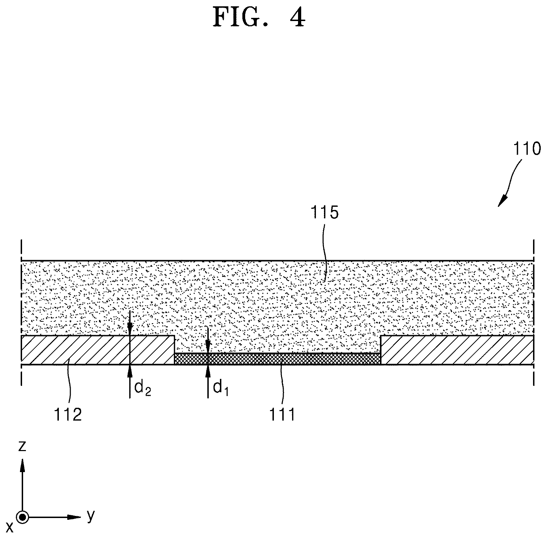

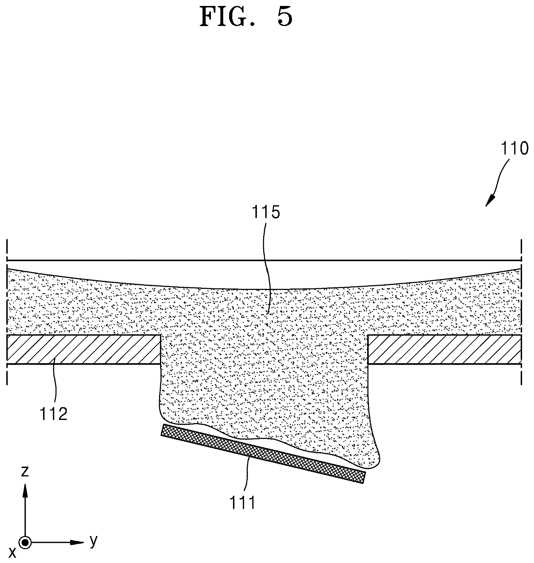

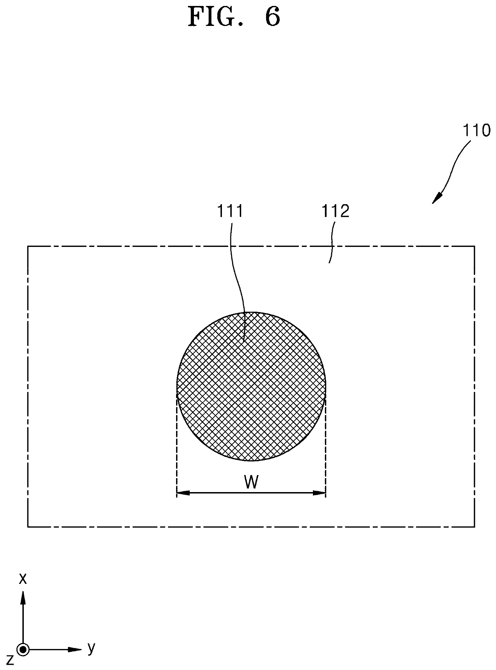

FIG. 1 is an exploded perspective view schematically illustrating an example of a battery module according to an embodiment of the present invention, FIG. 2 is a perspective view schematically illustrating an example of a battery cell of the battery module of FIG. 1, FIG. 3 is a cross-sectional view schematically illustrating an example of a cross-section B-B' of FIG. 2, FIG. 4 is a cross-sectional view schematically illustrating an example of a cross-section A-A' of a fire extinguishing portion of FIG. 1, FIG. 5 is a cross-sectional view illustrating a first region detaching and a stored fire extinguishing agent being released when a temperature of the battery module increases, and FIG. 6 is a plan view schematically illustrating an example of a lower fire extinguishing case of the fire extinguishing portion of FIG. 4.

First, referring to FIGS. 1 to 3, a battery module 100 according to an embodiment of the present invention may include terminal portions 11, 12 including a first terminal 11 and a second terminal 12, a plurality of battery cells 10 arranged in one direction (the X-axis direction), a connection tab 20 connecting a battery cell 10a to another battery cell 10b adjacent thereto, and a protection circuit module 30 having one end connected to the connection tab 20.

The protection circuit module 30 may include a battery management system (BMS). In addition, the connection tab 20 may include a body portion that contacts the terminal portions 11, 12 between adjacent of the battery cells 10a, 10b and an extension portion extending from the body portion and connected to the protection circuit module 30. The connection tab 20 may be a bus bar.

First, the battery cell 10 may include a case 15, an electrode assembly 210 and an electrolyte accommodated within the case 15. The electrode assembly 210 and the electrolyte may electrochemically react with each other to generate energy.

On one side of the battery cell 10, the terminal portions 11, 12 that are electrically connected to the connection tab 20 and a vent 13 which is a passage for discharging gas generated internally may be provided. The terminal portions 11, 12 of the battery cell 10 may be the first terminal 11 and the second terminal 12 which have different polarities. For example, when the first terminal 11 is a positive terminal, the second terminal 12 may be a negative terminal, and conversely, when the first terminal 11 is a negative terminal, the second terminal 12 may be a positive terminal. That is, the first terminal 11 and the second terminal 12 may have different electrical polarities.

The terminal portions 11, 12 of adjacent of the battery cells 10 may be electrically connected in series and/or in parallel by using the connection tab 20. For example, the first terminal 11 of one battery cell 10 may be electrically connected to the second terminal 12 of another adjacent of the battery cell 10 through the connection tab 20, and the second terminal 12 of one battery cell 10 may be electrically connected to the first terminal 11 of another adjacent of the battery cell 10 through another connection tab 20.

While FIG. 1 illustrates a serial connection as an example, various connection structures may be adopted as needed. In some embodiments, the number and arrangement of battery cells may be different than the structure illustrated in FIG. 1 and may be changed as needed.

The plurality of battery cells 10 may be arranged in one direction (the X-axis direction) such that wide surfaces of the battery cells 10 face each other, and the arranged plurality of battery cells 10 may be accommodated by a housing 61, 62, 63, 64.

The housing 61, 62, 63, 64 may include a pair of end plates 61 and 62 facing the wide surfaces of the battery cells 10, side plates 63 connecting the pair of end plates 61 and 62, and a bottom plate 64.

The side plates 63 support the side surfaces of the battery cells 10, and the bottom plate 64 may support the bottom surfaces of the battery cells 10. In addition, the pair of end plates 61 and 62, the side plates 63, and the bottom plate 64 may be connected by a member such as a bolt 65.

The protection circuit module 30 may have mounted therein electronic components and protection circuits, etc., and may be electrically connected to the connection tab 20 described below.

The protection circuit module 30 may include a first protection circuit module 30a and a second protection circuit module 30b that extend from different positions along the X-axis direction in which the plurality of battery cells 10 are arranged, and the first protection circuit module 30a and the second protection circuit module 30b may be spaced apart from each other by a certain distance but positioned parallel to each other and be electrically connected to adjacent of the connection tabs 20.

For example, the first protection circuit module 30a may extend on one side of an upper portion of the plurality of battery cells 10 in the one direction (the X-axis direction) in which the plurality of battery cells 10 are arranged, and the second protection circuit module 30b may extend on the other side of the upper portion of the plurality of battery cells 10 in the one direction (the X-axis direction) in which the plurality of battery cells 10 are arranged, and the second protection circuit module 30b may be positioned apart from the first protection circuit module 30a by a certain distance with the vent 13 therebetween, and be arranged parallel to the first protection circuit module 30a.

As such, the two protection circuit modules 30 may be arranged parallel to and spaced apart from each other in the one direction (the X-axis direction) in which the plurality of battery cells 10 are arranged, and accordingly, the area of a printed circuit board (PCB) constituting the protection circuit module 30 may be minimized. The protection circuit module 30 may be configured separately as two protection circuit modules 30a and 30b to minimize an unnecessary PCB area.

The first protection circuit module 30a and the second protection circuit module 30b may be connected to each other by a connection member 50 which is conductive. One side of the connection member 50 may be connected to the first protection circuit module 30a, and the other side thereof may be connected to the second protection circuit module 30b, and thus, the two protection circuit modules 30a and 30b may be electrically connected to each other.

The connection may be performed by any one of soldering, resistance welding, laser welding or projection welding methods.

The connection member 50 may include a material having elasticity or flexibility. By using the connection member 50, a voltage, a temperature, and a current of the plurality of battery cells 10 may be checked and managed to ensure these features are normal.

That is, information such as voltage, current, and temperature received by the first protection circuit module 30a from the connection tabs 20 adjacent thereto and information such as voltage, current, and temperature received by the second protection circuit module 30b from connection tabs 20 adjacent thereto may be integrated and managed by the protection circuit module 30 through the connection member 50.

In addition, when the battery cell 10 swells, the impact may be absorbed by the elasticity or flexibility of the connection member 50, thereby preventing the first and second protection circuit modules 30a, 30b from being damaged.

The shape and structure of the connection member 50 may vary from that illustrated in FIG. 1.

As such, as the protection circuit module 30 includes the first and second protection circuit modules 30a and 30b, the area of the PCB constituting the protection circuit module 30 may be minimized, thereby securing space inside the battery module 100. Accordingly, work efficiency may be improved by facilitating repairs when an abnormality is detected in the battery module 100 as well as the fastening work of connecting the connection tab 20 to the protection circuit module 30.

The battery cell 10 according to the present embodiment may include at least one electrode assembly 210 wound with a separator 213, which is an insulator, arranged between a positive electrode 211 and a negative electrode 212, and the case 15 in which the electrode assembly 210 is built (e.g., accommodated).

The battery cell 10 according to the present embodiment, which has a square shape, is described as an example. However, the present invention may be applied to various types of battery cells, such as pouch-type or cylindrical battery cells.

The positive electrode 211 and the negative electrode 212 may include a coated portion, which is a region of a current collector, to which an active material is applied to a current collector formed of a metal foil of a thin plate, and non-coated portions 211a and 212a, respectively, which are not coated with the active material.

The positive electrode 211 and the negative electrode 212 are wound with the separator 213, which is an insulator, arranged therebetween. However, the electrode assembly 210 described above may have a structure in which a positive electrode and a negative electrode including a plurality of sheets are alternately stacked with a separator therebetween.

The case 15 may form the overall appearance of the battery cell 10 and may include a conductive metal such as aluminum, an aluminum alloy, or nickel-plated steel. In some embodiments, the case 15 may provide a space in which the electrode assembly 210 is accommodated.

The battery cell 10 may include a cap plate 17 covering an opening of the case 15, and the case 15 and the cap plate 17 may include a conductive material. Here, the first terminal 11 and the second terminal 12 electrically connected to the positive electrode 211 or the negative electrode 212 may be installed to penetrate the cap plate 17 to protrude outwardly.

In addition, outer surfaces of upper pillars of the first terminal 11 and the second terminal 12 protruding outward from the cap plate 17 may be threaded and fixed to the cap plate 17 using a nut.

However, the first terminal 11 and the second terminal 12 may include a rivet structure and be riveted or may be welded to the cap plate 17.

In addition, the cap plate 17 may be formed of a thin plate and coupled to the opening of the case 15, and in the cap plate 17, an electrolyte injection port 14 into which a sealing plug may be installed may be formed and the vent 13 having a notch may be installed.

The first terminal 11 and the second terminal 12 may be electrically connected to a current collector including a first current collector 240 and a second current collector 250 (hereinafter referred to as a positive current collector and a negative current collector, respectively) welded to a positive non-coated portion 211a or a negative non-coated portion 212a.

For example, the first terminal 11 and the second terminal 12 may be respectively coupled to the positive and negative current collectors 240, 250 by welding. However, the first terminal 11 and the second terminal 12 and the positive and negative current collectors 240, 250, respectively, may be formed integrally.

In some embodiments, an insulating material may be installed between the electrode assembly 210 and the cap plate 17. Here, the insulating member may include a first lower insulating member 260 and a second lower insulating member 270, and each of the first and second lower insulating members 260 and 270 may be installed between the electrode assembly 210 and the cap plate 17.

In some embodiments, according to the present embodiment, one end of a separation member that may be installed to face one side of the electrode assembly 210 may be installed between the insulating member and the first terminal 11 and the second terminal 12.

Here, the separation member may include a first separation member 280 and a second separation member 290.

Accordingly, one end of each of the first and second separation members 280 and 290 that may be installed to face one side of the electrode assembly 210 may be installed between the first and second lower insulating members 260 and 270 and the first terminal 11 and the second terminal 12.

Finally, the first terminal 11 and the second terminal 12, which are welded to the positive and negative current collectors 240 and 250, respectively, may be coupled to one end of each of the first and second lower insulating members 260, 270 and the one end of each of the first and second separation members 280, 290.

Referring to FIG. 1 and FIGS. 4 to 6 together, the battery module 100 may further include a cover portion 140 covering upper surfaces of the plurality of battery cells 10 and a fire extinguishing portion 130 positioned between the plurality of battery cells 10 and the cover portion 140.

The cover portion 140 may be coupled to the housing 61, 62, 63, 64 using a fastening member such as a bolt, but any method that may be used for fastening is possible. The cover portion 140 may be coupled to the housing 61, 62, 63, 64 to form an internal space, and the plurality of battery cells 10 and the fire extinguishing portion 130 may be accommodated in the internal space. Thus, the material of the cover portion 140 and the housing 61, 62, 63, 64 needs to be a material capable of protecting the plurality of battery cells 10 and the fire extinguishing portion 130 from mechanical impact or thermal impact.

Accordingly, the material of the cover portion 140 and the housing 61, 62, 63, 64 may include, for example, a durable and heat-resistant material, such as at least one of acrylonitrile butadiene styrene (ABS), polycarbonate (PC), polypropylene (PP), aluminum, and stainless steel.

The fire extinguishing portion 130 may include a lower extinguishing case 110 and a fire extinguishing cover 120 coupled to the lower extinguishing case 110, and the lower extinguishing case 110 may include a plurality of first regions 111 and a second region 112 which have different thermal shrinkage rates. In some embodiments, the plurality of first regions 111 may be located within the second region 112. That is, the plurality of first regions 111 may be arranged to be in contact with the second region 112 within the second region 112.

The fire extinguishing portion 130 may further include a fire extinguishing agent 115 stored between the lower extinguishing case 110 and the fire extinguishing cover 120. The fire extinguishing agent 115 may be injected into the fire extinguishing portion 130 through an injection port 121 located in the fire extinguishing cover 120.

In some embodiments, at a temperature equal to or higher than a certain level (e.g., a predetermined temperature), the fire extinguishing portion 130 may release the fire extinguishing agent 115 stored thereinside, toward the battery cells 10. The fire extinguishing agent 115 may include, for example, halogenated carbon that absorbs heat through latent heat of vaporization to cool the battery cells 10. In other embodiments, the fire extinguishing agent 115 may include a material for oxygen dilution, such as a solid aerosol, which extinguishes a fire by blocking oxygen, but this may vary.

The plurality of first regions 111 and the second region 112 may have different thermal shrinkage rates from each other, and each of the plurality of first regions 111 may be arranged to overlap the vent 13. In some embodiments, the thermal shrinkage rate of each of the plurality of first regions 111 may be greater than the thermal shrinkage rate of the second region 112.

As a temperature of one battery cell 10 rises, an electrolyte inside the battery cell 10 may be thermally decomposed to generate flammable gas. In some embodiments, oxygen may be generated due to decomposition of oxide in a positive electrode in the battery cell 10. As a result, all three elements of fire, heat, fuel (flammable gas), and oxygen, are generated, which may cause thermal runaway in the battery cell 10.

If a thermal runaway occurs in one of the battery cells 10, high-temperature gas and flames may be released from the vent 13 of the battery cell 10. If each of the plurality of first regions 111 is arranged to overlap with each of the vent 13, the plurality of first regions 111 may be heated and deformed by the high-temperature gas and flame released from the vent 13, and the second region 112 arranged to surround the plurality of first regions 111 may also be heated and deformed by the high-temperature gas and flame.

In this case, as the thermal shrinkage rate of each of the plurality of first regions 111 is different from the thermal shrinkage rate of the second region 112, the plurality of first regions 111 and the second region 112 may expand or contract at different rates. Accordingly, when there is a difference in expansion or contraction of the plurality of first regions 111 and the second region 112, an unbalanced stress may be concentrated at portions where the plurality of first regions 111 and the second region 112 are bonded to each other, which may weaken or destroy the bonding portion between the plurality of first regions 111 and the second region 112. As a result, the plurality of first regions 111 may detach from the lower extinguishing case 110, and the fire extinguishing portion 130 may extinguish a fire by releasing the fire extinguishing agent 115 stored thereinside, toward the battery cell 10.

A difference between the thermal shrinkage rate of each of the plurality of first regions 111 and the thermal shrinkage rate of the second region 112 may be about 0.1 % to about 10 %. As an embodiment, the difference between the thermal shrinkage rate of each of the plurality of first regions 111 and the thermal shrinkage rate of the second region 112 may be about 0.2 % to about 5 % or about 0.2 % to about 3 %.

If the difference between the thermal shrinkage rate of each of the plurality of first regions 111 and the thermal shrinkage rate of the second region 112 is less than 0.1%, when the battery cell 10 undergoes thermal runaway, the stress acting on the bonding portion between the plurality of first regions 111 and the second region 112 becomes small, and accordingly, the plurality of first regions 111 may not be detached from the fire extinguishing portion 130, and as a result, there is a risk that the fire extinguishing agent 115 stored in the fire extinguishing portion 130 may not extinguish a fire in the battery cell 10, causing propagation of the thermal runaway. In addition, if the difference between the thermal shrinkage rate of each of the plurality of first regions 111 and the thermal shrinkage rate of the second region 112 is greater than 10 %, the stress applied to the bonding portion between the plurality of first regions 111 and the second region 112 becomes excessively large, and accordingly, even though the temperature of the battery cell 10 is within a normal operating range, the plurality of first regions 111 may detach from the fire extinguishing portion 130 and release the fire extinguishing agent 115, resulting in waste of materials.

In the present specification, the 'normal operating temperature range of the battery cell 10' refers to a temperature range in which the battery cell 10 may stably supply power. If the battery cell 10 is outside the normal operating temperature range, the performance of the battery cell 10 may deteriorate, the lifespan thereof may be shortened, or stability problems may occur. For example, the normal operating temperature range of the battery cell 10 may be about -20 °C to about 60 °C, and a temperature range in which no performance degradation, shortened lifespan, or stability problems of the battery cell 10 occur may be the normal operating temperature range of the battery cell 10.

The material of the plurality of first regions 111 and the second region 112 may include, for example, at least one of durable and heat-resistant materials, such as ABS, PC, PP, aluminum, and stainless steel.

The shape of each of the plurality of first regions 111 may be, for example, circular. When the shape of each of the plurality of first regions 111 is circular, when thermal shrinkage occurs due to an increase in the temperature of the battery cell 10, the stress applied to the bonding portion between the plurality of first regions 111 and the second region 112 may be applied symmetrically and evenly to the bonding portion between the plurality of first regions 111 and the second region 112. As a result, in the event of a thermal runaway, the plurality of first regions 111 may be easily detached from the fire extinguishing portion 130 and the fire extinguishing agent 115 stored inside the fire extinguishing portion 130 may be sprayed to suppress the thermal runaway.

In addition, when the plurality of first regions 111 is circular, when the fire extinguishing agent 115 is emitted, the resistance between the fire extinguishing agent 115 and the plurality of first regions 111 is relatively small, and thus the fire extinguishing agent 115 may flow uniformly and be sprayed efficiently. In addition, if the shape of each of the plurality of first regions 111 is circular, the manufacturing of the lower extinguishing case 110 may also be facilitated.

As another example, the shape of each of the plurality of first regions 111 may correspond to (e.g., match) the shape of the vent 13 of the battery cell 10. Accordingly, when flames and gas are emitted from the vent 13 of the battery cell 10, the thermal runaway may be suppressed by evenly spraying the fire extinguishing agent 115 over the entirety of the vents 13 by the plurality of first regions 111 corresponding to (e.g., aligned with) the vents 13.

As another example, the shape of each of the plurality of first regions 111 may be elliptical. The shape of the vents 13 may be similar to an ellipse, and when the shape of each of the plurality of first regions 111 is an ellipse, the advantages of when the shape of each of the plurality of first regions 111 is circular may be achieved, while at the same time, the advantages of a case where the shape of each of the plurality of first regions 111 corresponds to the shape of the vents 13 of the battery cell 10 may also be achieved.

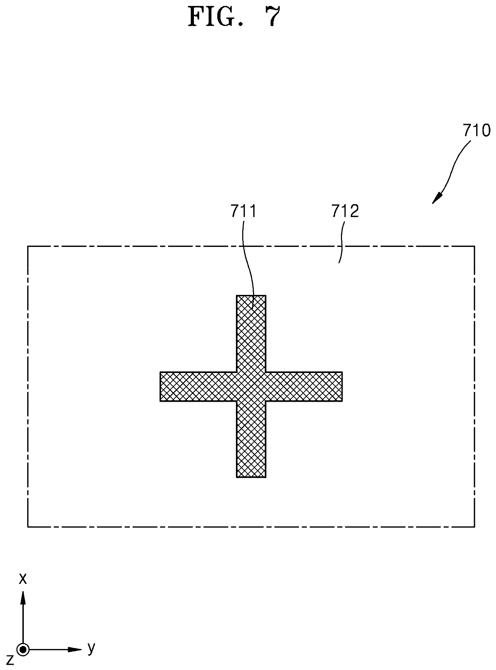

However, the plurality of first regions 111 may have various shapes including a polygon. In some embodiments, the shape of each of the plurality of first regions 111 may be cross-shaped as described below with reference to FIG. 7.

A spray amount of the fire extinguishing agent 115 stored in the fire extinguishing portion 130 may be proportional to the area of the plurality of first regions 111. For example, if the shape of each of the plurality of first regions 111 is circular, a diameter w (see FIG. 6) of the plurality of first regions 111 may be about 5 mm to about 50 mm. When the diameter w of the plurality of first regions 111 is less than 5 mm, and when the plurality of first regions 111 detach as the temperature of the battery cell 10 increases, the spray amount of the fire extinguishing agent 115 stored in the fire extinguishing portion 130 may be relatively small, resulting in a low fire-extinguishing effect on the battery cell 10.

In addition, when the diameter w of the plurality of first regions 111 exceeds 50 mm, an area where the plurality of first regions 111 and the second region 112 come into contact with each other increases, and thus the stress applied to the bonding portion between the plurality of first regions 111 and the second region 112 may increase. Accordingly, as described above, even if the temperature of the battery cell 10 increases slightly, the plurality of first regions 111 may detach from the fire extinguishing portion 130 and release the fire extinguishing agent 115, resulting in waste of materials.

A thickness d₁ (see FIG. 4) of the plurality of first regions 111 may be about 0.1 mm to about 2 mm. In some embodiments, the thickness d₁ of the first regions may be smaller than a thickness d₂ of the second region. If the thickness d₁ of the plurality of first regions 111 is less than 0.1 mm, when the plurality of first regions 111 is deformed due to an increase in the temperature of the battery module 100, a relatively large amount of stress may be applied to the plurality of first regions 111, and accordingly, the plurality of first regions 111 may be difficult to firmly attach to the second region 112 and the plurality of first regions 111 may easily fall off from the fire extinguishing portion 130 and the fire extinguishing agent 115 may be released even though the temperature of the battery cell 10 is within the normal operating range.

If the thickness d₁ of the plurality of first regions 111 is greater than 2 mm or the thickness d₁ of the plurality of first regions 111 is greater than or equal to the thickness d₂ of the second region 112, in the event of a thermal runaway of the battery cell 10, despite expansion or contraction of the plurality of first regions 111 and the second region 112, a thickness of a region where the plurality of first regions 111 and the second region 112 come into contact with each other may increase, thereby increasing a time required for the plurality of first regions 111 to detach from the fire extinguishing portion 130, and thus the thermal runaway of the battery cell 10 may not be suppressed in the early stage.

When heating the fire extinguishing portion 130, the time required for the plurality of first regions 111 to detach according to the thickness d₁ of the plurality of first regions 111 and the thickness d₂ of the second region 112 was tested. As the second region 112 of the fire extinguishing portion 130, a material obtained by mixing impurities in PC having a thermal shrinkage rate of 0.8 % was used, and as the plurality of first regions 111, a material which is a material obtained by mixing impurities in PC having a thermal shrinkage rate of 1.4 % was used. A difference in the thermal shrinkage rates occurred due to a difference in the amount of impurities mixed in the plurality of first regions 111 and the second region 112. The difference in thermal shrinkage rates may occur due to a difference in material (e.g., the amount of impurities mixed in the plurality of first regions 111 and the second region 112).

### -Experimental Example 1-

The shape of each of the plurality of first regions 111 was circular, the diameter w was 20 mm, and the thickness d₁ was 0.3 mm. The thickness d₂ of the second region 112 was 2 mm.

In this case, the plurality of first regions 111 detached from the fire extinguishing portion 130 after 8 seconds of heating.

### -Experimental Example 2-

The shape of each of the plurality of first regions 111 was circular, the diameter w was 20 mm, and the thickness d₁ was 0.5 mm. The thickness d₂ of the second region 112 was 2 mm.

In this case, the plurality of first regions 111 detached from the fire extinguishing portion 130 after 14 seconds of heating.

### -Experimental Example 3-

The shape of each of the plurality of first regions 111 was circular, the diameter w was 20 mm, and the thickness d₁ was 1 mm.

The thickness d₂ of the second region 112 was 2 mm.

In this case, the plurality of first regions 111 detached from the fire extinguishing portion 130 after 25 seconds of heating.

As described above, it was confirmed through Experimental Example 1 to Experimental Example 3 that, as the thickness d₁ of the plurality of first regions 111 increases, the time required for the plurality of first regions 111 to detach increased.

FIG. 7 is a plan view schematically illustrating another example of a lower extinguishing case of the fire extinguishing portion of FIG. 4.

Referring to FIG. 7, a lower extinguishing case 710 of an extinguishing portion according to another embodiment of the present invention may include a plurality of first regions 711 and a second region 712 which have different thermal shrinkage rates. In some embodiments, the plurality of first regions 711 may be positioned to overlap with each vent within the second region 712. That is, the first regions 711 may be arranged to be in contact with the second region 712 within the second region 712. In some embodiments, a thermal shrinkage rate of first regions 711 may be greater than a thermal shrinkage rate of the second region 712.

If a thermal runaway occurs in one of battery cells, high-temperature gases and flames may be released from vents of the battery cells. The plurality of first regions 711 may be arranged to overlap with the vents, and thus, the first regions 711 may be heated and deformed by the high-temperature gas and flame, and the second region 712 arranged to surround the first regions 711 may also be heated and deformed by the high-temperature gas and flame. In this case, as the thermal shrinkage rate of each of the first regions 711 is greater than the thermal shrinkage rate of the second region 712, the first regions 711 may detach from the lower extinguishing case 710 of the fire extinguishing portion. As a result, the fire extinguishing portion may extinguish a fire by releasing a fire extinguishing agent stored thereinside, toward the battery cells.

The shape of each of the first regions 711 may be cross-shaped. If the shape of each of the first regions 711 is cross-shaped, stress may be concentrated at corners or intersections of the shape. Accordingly, when the first regions 711 and the second region 712 undergo thermal shrinkage due to an increase in the temperature of the battery cells, stress may be concentrated at the corners or intersections, causing the first regions 711 to quickly detach. That is, when the shape of the first regions 711 are cross-shaped, and when a thermal runaway of the battery cells occurs, the first regions 711 may quickly detach from the fire extinguishing portion and the fire extinguishing agent stored in the fire extinguishing portion may be sprayed onto the battery cells to suppress the thermal runaway in the early stage.

However, the shape of each of the first regions 711 may vary, and as long as the first regions 711 have a shape that quickly detaches from the fire extinguishing portion, the first regions 711 may have various shapes.

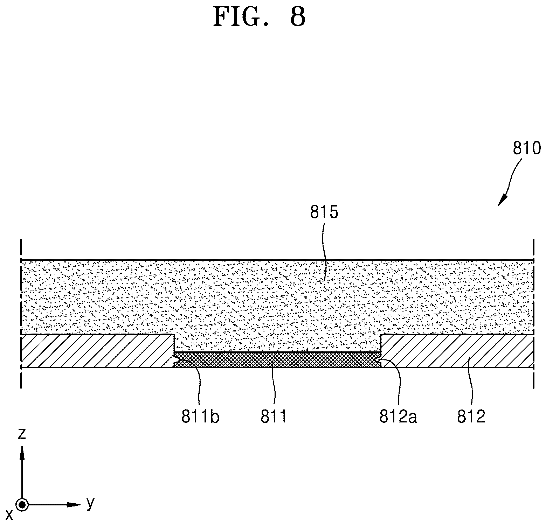

FIG. 8 is a cross-sectional view schematically illustrating another example of the cross-section A-A' of the fire extinguishing portion of FIG. 1.

Referring to FIG. 8, the fire extinguishing portion may include a lower extinguishing case 810 and a fire extinguishing cover coupled to the lower extinguishing case 810, and the lower extinguishing case 810 may include a plurality of first regions 811 and a second region 812 having different thermal shrinkage rates. In some embodiments, the plurality of first regions 811 may be located within the second region 812. That is, the first regions 811 may be arranged to be in contact with the second region 812 within the second region 812.

The fire extinguishing portion may further include a fire extinguishing agent 815 stored between the lower extinguishing case 810 and the fire extinguishing cover. The fire extinguishing portion may release the fire extinguishing agent 815 stored thereinside, toward battery cells at a temperature equal or higher than a certain level. The fire extinguishing agent 815 may include, for example, halogenated carbon that absorbs heat through latent heat of vaporization to cool the battery cells. In other embodiments, the fire extinguishing agent 815 may include, for example, a material for oxygen dilution, such as a solid aerosol, which extinguishes a fire by blocking oxygen.

The second region 812 may include a fastening projection 812a protruding toward the first regions 811. Each of the first regions 811 may include a fastening groove 811b that is recessed inward from the first regions 811 to correspond to the fastening projection 812a.

When the first regions 811 each include the fastening groove 811b and the second region 812 includes the fastening projection 812a, the fastening groove 811b may be fastened with the fastening projection 812a, which allows the first regions 811 and the second region 812 to be firmly fastened with each other within the normal operating temperature range of the battery module. As a result, when an event (for example, a thermal runaway) does not occur, the first regions 811 may detach from the lower extinguishing case 810, thereby preventing the fire extinguishing agent 815 stored inside from leaking out.

When thermal runaway occurs in a battery cell, as the thermal shrinkage rate of each of the first regions 811 is different from that of the second region 812 are different from each other, even when the first regions 811 include the fastening groove 811b and the second region 812 includes the fastening projection 812a, the first regions 811 and the second region 812 may expand or contract, causing the first regions 811 to detach from the lower extinguishing case 810. Accordingly, the fire extinguishing agent 815 stored inside the fire extinguishing portion may be sprayed toward the battery cell, thereby suppressing the thermal runaway occurring in the battery cell and improving the stability of the battery module.

The first regions 811 may each include a fastening projection, and the second region 812 may include a fastening groove recessed inward from the second region 812.

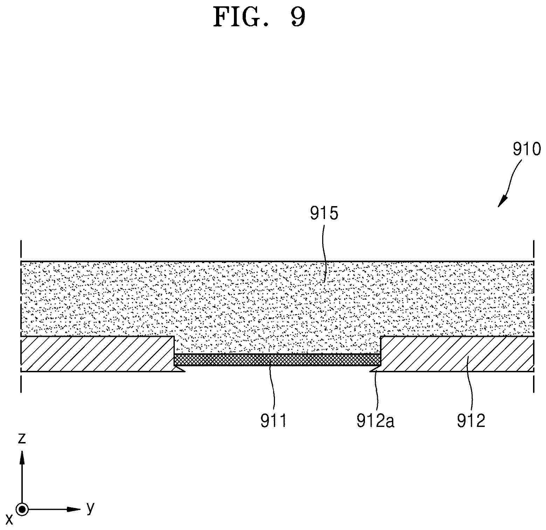

FIG. 9 is a cross-sectional view schematically illustrating another example of the cross-section A-A' of the fire extinguishing portion of FIG. 1.

Referring to FIG. 9, the fire extinguishing portion may include a lower extinguishing case 910 and a fire extinguishing cover coupled to the lower extinguishing case 910, and the lower extinguishing case 910 may include a plurality of first regions 911 and a second region 912 which have different thermal shrinkage rates. In some embodiments, the plurality of first regions 911 may be located within the second region 912. That is, the first regions 911 may be arranged to be in contact with the second region 912 within the second region 912.

The fire extinguishing portion may further include a fire extinguishing agent 915 stored between the lower extinguishing case 910 and the fire extinguishing cover. The fire extinguishing portion may release the fire extinguishing agent 915 stored thereinside, toward battery cells at a temperature equal to or higher than a certain level (e.g., predetermined temperature).

The second region 912 may include a support portion 912a that protrudes obliquely from one side of the second region 912 toward the first regions 911 so as to support a lower surface of the first regions 911. However, the support portion 912a may protrude in a direction parallel to the first regions 911 from one side of the second region 912 so as to support the lower surface of the first regions 911.

When the second region 912 includes the support portion 912a, the support portion 912a may support the first regions 911, and thus the first regions 911 may not detach from the lower extinguishing case 910 within the normal operating temperature range of the battery module. Accordingly, when an event does not occur, detachment of the first regions 911 from the lower extinguishing case 910, which causes leakage of the fire extinguishing agent 915 stored thereinside may be prevented.

When thermal runaway occurs in a battery cell, as the thermal shrinkage rate of each of the first regions 911 is different from that of the second region 912, and thus, even when the second region 912 includes the support portion 912a, the first regions 911 and the second region 912 may expand or contract, causing the first regions 911 to detach from the lower extinguishing case 910. As a result, the fire extinguishing agent 915 stored inside the fire extinguishing portion may be sprayed toward the battery cell, thereby suppressing the thermal runaway occurring in the battery cell and improving the stability of the battery module.

Although the present invention has been described above by means of limited embodiments and drawings, the present invention is not limited thereto, and it is obvious that various modifications and variations may be made within the scope of the present invention and the equivalent scope of the patent claims to be described below by a person skilled in the art to which the present invention pertains.

According to the embodiments of the present invention, a lower extinguishing case of a fire extinguishing portion of a battery module includes a plurality of first regions and a second region which have different thermal shrinkage rates from each other, and when the temperature of the battery module increases, the first regions are detached and a fire extinguishing agent stored in the fire extinguishing portion extinguishes a fire in the battery module, thereby extinguishing the fire in the battery module in the early stage of thermal runaway and preventing the thermal runaway from spreading to the entire battery module in advance and thus improving the stability of the battery module.

However, the effects that may be obtained through the present invention are not limited to those described above, and other technical effects not mentioned will be clearly understood by those skilled in the art from the description of the present invention described below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A battery module (100), comprising:
a plurality of battery cells (10);
a housing (61, 62, 63, 64) accommodating the plurality of battery cells (10); and
a fire extinguishing portion (130) on the plurality of battery cells (10), the fire extinguishing portion (130) having a fire extinguishing agent (115, 815, 915) stored therein,
wherein:
the fire extinguishing portion (130) includes a lower extinguishing case (110, 710, 810, 910) and a fire extinguishing cover (120) coupled to the lower extinguishing case (110, 710, 810, 910),
the lower extinguishing case (110, 710, 810, 910) includes a plurality of first regions (111, 711, 811, 911) and a second region (112, 712, 812, 912), the plurality of first regions (111, 711, 811, 911) being within the second region (112, 712, 812, 912), and
a thermal shrinkage rate of each of the plurality of first regions (111, 711, 811, 911) is different from that of the second region (112, 712, 812, 912).

2. The battery module (100) as claimed in claim 1, wherein:
each of the plurality of battery cells (10) includes a vent (13), and
the plurality of first regions (111, 711, 811, 911) overlap the vents (13) of the plurality of battery cells (10), respectively.

3. The battery module (100) as claimed in claim 1 or 2, wherein the thermal shrinkage rate of each of the plurality of first regions (111, 711, 811, 911) is greater than the thermal shrinkage rate of the second region (112, 712, 812, 912).

4. The battery module (100) as claimed in any one of the preceding claims, wherein a difference between the thermal shrinkage rate of each of the plurality of first regions (111, 711, 811, 911) and the thermal shrinkage rate of the second region (112, 712, 812, 912) is about 0.1 % to about 10 %.

5. The battery module (100) as claimed in any one of the preceding claims, wherein a thickness (d₁) of each of the plurality of first regions (111, 711, 811, 911) is about 0.1 mm to about 2 mm.

6. The battery module (100) as claimed in any one of the preceding claims, wherein a thickness (d₁) of each of the plurality of first regions (111, 711, 811, 911) is smaller than a thickness (d₂) of the second region (112, 712, 812, 912).

7. The battery module (100) as claimed in any one of the preceding claims, wherein a shape of each of the plurality of first regions (111, 711, 811, 911) is circular.

8. The battery module (100) as claimed in claim 7, wherein a diameter (w) of each of the plurality of first regions (111, 711, 811, 911) is about 5 mm to about 50 mm.

9. The battery module (100) as claimed in any one of the preceding claims, wherein, if a temperature of the battery module (100) increases to a predetermined temperature or higher, the plurality of first regions (111, 711, 811, 911) detach from the fire extinguishing portion (130).

10. The battery module (100) as claimed in any one of the preceding claims, wherein each of the plurality of first regions (111, 711, 811, 911) has a cross shape.

11. A battery module (100), comprising:
a plurality of battery cells (10), each of the plurality of battery cells (10) including a vent (13); and
a fire extinguishing portion (130) on the plurality of battery cells (10), the fire extinguishing portion having (130) a fire extinguishing agent (115, 815, 915) stored therein,
wherein:
the fire extinguishing portion (130) includes a lower extinguishing case (110, 710, 810, 910) and a fire extinguishing (120) cover coupled to the lower extinguishing case (110, 710, 810, 910),
the lower extinguishing case (110, 710, 810, 910) includes a plurality of first regions (111, 711, 811, 911) and a second region (112, 712, 812, 912) having different thermal shrinkage rates, and
each of the plurality of first regions (111, 711, 811, 911) is surrounded by the second region (112, 712, 812, 912), each of the plurality of first regions (111, 711, 811, 911) overlapping the respective vent (13).

12. The battery module (100) as claimed in claim 11, wherein, if a temperature of the battery module (100) increases to a predetermined temperature or higher, the plurality of first regions (111, 711, 811, 911) detach from the fire extinguishing portion (130).

13. The battery module (100) as claimed in claim 12, wherein the fire extinguishing portion (130) releases the fire extinguishing agent (115, 815, 915) when the plurality of first regions (111, 711, 811, 911) detach.

14. The battery module (100) as claimed in any one of claims 11 to 13,
wherein the second region (112, 712, 812, 912) includes a support portion (912a) protruding obliquely from one side of the second region (112, 712, 812, 912) toward the plurality of first regions (111, 711, 811, 911) so as to support a lower surface of each of the plurality of first regions (111, 711, 811, 911).

15. The battery module (100) as claimed in any one of claims 11 to 14, wherein:
the second region (112, 712, 812, 912) includes a fastening projection (812a) protruding in a direction toward the plurality of first regions (111, 711, 811, 911), and
each of the plurality of first regions (111, 711, 811, 911) includes a fastening groove (811b) recessed inwardly from the plurality of first regions (111, 711, 811, 911) and corresponds to the fastening projection (812a).
